# EUROPEAN PATENT APPLICATION

(11) **EP 4 775 380 A1**
(43) Date of publication of application: **15.07.2026**
(21) Application number: 25151249.7
(22) Date of filing: 10.01.2025
(51) Int. Cl.: B29C 64/112, B29C 64/291, B29C 64/393, B33Y 10/00, B33Y 30/00, B33Y 50/02, B33Y 80/00, B41J 3/28, B41J 3/54, B41J 11/00

(54) **INKJET PRINTING OF 3D STRUCTURES WITH A 2D BACKGROUND IMAGE AND A PRINTER THEREFOR**

(71) Applicant: Canon Production Printing Holding B.V., 5914 HH Venlo (NL)
(72) Inventor: KNECHTEN, Carolus A.M., Venlo (NL)
(74) Representative: Canon Production Printing IP Department

(57) **Abstract**

A method of printing 3D structures spaced apart from each other and distributed across a 2D background image on a scanning printer comprises the steps of printing swaths for the 3D structures at a low resolution to create 3D structures of a predetermined height, printing swaths for the background image in high resolution, being a manifold of the low resolution. A number of passes for completing a segment of the background image is less than a number of passes for completing a segment of structures. In certain high resolution passes printing of both the background image and the 3D structures is combined, said passes being separated from one another by a number of low resolution passes.

## Description

### BACKGROUND OF THE INVENTION

### 1. Field of the invention

The invention relates a method of printing 3D structures spaced apart from each other and distributed across a 2D background image on a scanning printer, comprising the steps of printing swaths for the 3D structures at a low resolution to create 3D structures of a predetermined height, and printing swaths for the background image in high resolution, being a manifold of the low resolution, wherein a number of passes for completing a segment of the background image is less than a number of passes for completing a segment of structures.

Hereinafter the wording "CMYK(W) colours" means the colours cyan, magenta, yellow, black and optionally white respectively.

Hereinafter the wording "print head assembly" may also be shortened to "print head". The measure "dots per inch" to be ejected on the print medium may be abbreviated to "dpi" and the measure "nozzles per inch" in a print head assembly of the scanning printer may be abbreviated to "npi".

As an example of a 3D structure to be printed hereinafter a pillar is mentioned. However, 3D structures having another shape than a pillar may be envisioned.

### 2. Description of Background Art

Printing spaced apart 3D structures is usually done by means of a print head assembly in the scanning printer at 300 nozzles per inch, which is fast when it is a native resolution of the print head assembly. However, if 2D information is specified to be added, for example as a background layer, or in a different part of the print, a resolution of 600 nozzles per inch is required. So far, the whole print - the 3D structures and the 2D background image - is printed at 600 nozzles per inch, which reduces productivity since it may require interlacing, which is twice as slow.

### SUMMARY OF THE INVENTION

It is an object of the invention to provide an improved method of inkjet printing 3D structures with a 2D background image with a higher productivity.

In accordance with the present invention, a method of printing according to claim 1, an inkjet printer according to claim 4, and a computer program according to claim 6 are provided.

Said method of inkjet printing allows for printing a surface on a print medium. The method is characterized in that in certain high resolution passes printing of both the background image and the 3D structures is combined, said passes being separated from one another by a number of low resolution passes.

Via the printing strategy according to the present invention, the faster printing of the 3D structures at a low resolution and the 2D printing at a higher resolution is combined. According to an embodiment of the method according to the present invention the productivity only decreases about 6% with respect to 3D structure printing only. The advantage of said slightly more complex print strategy is that the 2D printing only barely slows down the printing process. This reduces printing time and hence also energy consumption for all 3D structure prints.

According to an embodiment the number of combined passes is a half of the number of passes for completing a segment of the background image.

According to an embodiment a total number of passes for completing the 3D structures corresponds to a height of the 3D structures.

According to an embodiment the low resolution is 300 dots per inch and the high resolution is 600 dots per inch. The resolution of 600 dpi may be related to a drop size and a desired print quality. The resolution of 300 dpi is sufficient to print 3D structures. A gain of print speed is related to a native print head resolution which may be also 300 dpi.

The present invention also relates to an inkjet printer comprising a translatable printhead carriage translatable over a medium support surface and comprising at least one printhead comprising nozzles for jetting droplet of UV curable marking material onto a print medium on the medium support surface, a curing station configured for emitting UV radiation for curing marking material on the print medium on the medium support surface and a print controller configured to perform the method according to the present invention.

According to an embodiment the inkjet printer is a roll fed printer or a flatbed printer.

The present invention also relates to a non-transitory software medium comprising a computer program with instructions which, when the program is executed by a print controller of an inkjet printer, cause the computer to carry out the steps of the method of the present invention.

The present invention also relates to a print medium with a printed surface formed by performing the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Figs. 1 - 2: are schematic examples of a scanning inkjet printer according to the present invention;
- Fig. 3: illustrates the process of printing 3D structures according to the present invention;
- Fig. 4: illustrates printing of swaths in even and odd steps of the print head assembly of the printer according to the present invention;
- Fig. 5A - 5B: show an example of prior art layer printing;
- Fig. 6A - 6B: show an example of printing layers according to the present invention;
- Fig. 7: is a flow diagram of the method according to the present invention; and
- Fig. 8: is a non-transitory software medium according to the invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

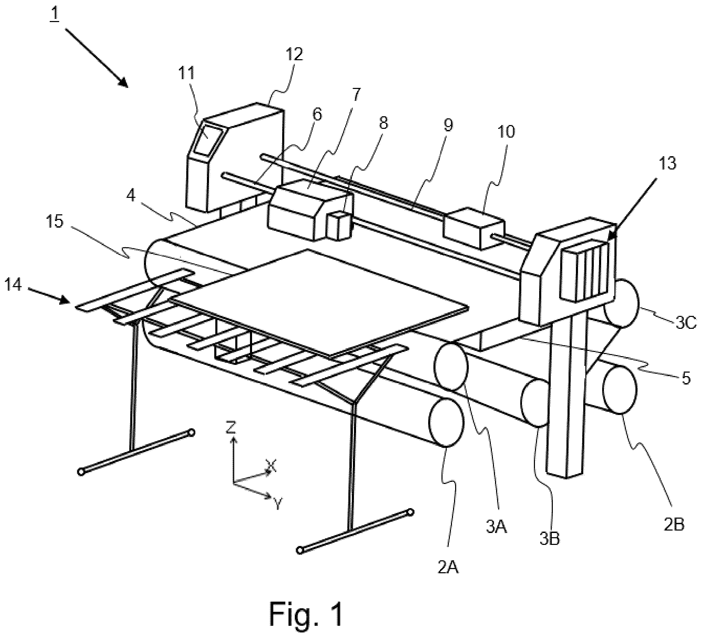

Fig. 1 shows a wide format inkjet printer 1. The wide-format printer 1 comprises an inkjet printing assembly 7 for printing on a print medium 15. The print medium 15 in Fig. 1 is a relatively rigid substrate, such as a panel. The print medium 15 is supplied from a media input unit 14, which may be configured for storing a plurality of such print media 15 and supplying these to the printer 1. The printer 1 comprises a conveyor for receiving and transporting the print medium 15 along the inkjet printing assembly 7. In Fig. 1, the conveyor comprise an endless transport belt 4 supported on a plurality of support rollers 3A, 3B, 3C. At least one of the support rollers 3A, 3B, 3C is provided with driving means for moving the belt 4. Additionally, one or more one of the support rollers 3A, 3B, 3C may be configured to be moved and/or tilted to adjust and control the lateral position of the belt 4. The inkjet printing assembly 7 may be provided with a sensor assembly 8, such as an area camera or line scanner, to determine the relative position and/or orientation of the belt 4 and/or the print medium 15 with respect to the printing assembly 7. The sensor assembly 8 may also be configured to determine one or more dimensions of the print medium 15, such as its width, length, and/or thickness/height. Data from said sensor assembly 8 may be applied to control the position of the belt 4 and/or the print medium 15. Specifically, the sensor assembly 8 may be arranged to determine the position, a dimension, and/or orientation of print media 15 on the belt 4, relatively e.g. to the transport direction X and/or their lateral position in the Y direction. The sensor assembly 8 may comprise a camera or scanner coupled to a data processor to determine a length, a position, and/or orientation of at least one edge of each substrate. The sensor assembly 8 is arranged to simultaneously detect multiple, parallel substrates on the belt 4. The belt 4 is further provided with through-holes and a suction box 5 in connection with a suction source (not shown), such that an underpressure may be applied to the print medium 15 via the through-holes in the belt 4. The underpressure adheres the print medium 15 flatly to the belt 4 and prevents displacement of the print medium 15 with respect to the belt 4. Due to this holding the belt 4 is able to transport the print medium 15. It will be appreciated that other suitable conveyors, such as rollers, steppers, etc, may alternatively be applied. The print medium 15 may be transported stepwise and/or in continuous movement.

The inkjet printing assembly 7 is configured to translate along a first guide beam 6 in a scanning direction. The scanning direction is perpendicular to the direction in which the print medium is transported by the belt 4. The inkjet printing assembly 7 holds a plurality of print heads (not shown), which are configured to jet a plurality of different marking materials (different colors of ink, primers, coatings, etc.) on the print medium 15. Each marking material for use in the printing assembly 7 is stored in one of a plurality of containers arranged in fluid connection with the respective print heads for supplying marking material to said print heads to print an image on the print medium 15.

The ejection of the marking material from the print heads is performed in accordance with data provided in the respective print job. The timing by which the droplets of marking material are released from the print heads determines their position on the print medium 15. The timing may be adjusted based on the position of the inkjet printing assembly 7 along the first guide beam 6. The above mentioned sensor assembly 8 may therein be applied to determine the relative position and/or velocity of the inkjet printing assembly 7 with respect to the print medium 15. Based upon data from the sensor assembly 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the print medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit 10 is provided downstream of the inkjet printing assembly 7. The fixation unit 10 may emit heat and/or radiation to facilitate the marking material fixation process. In the example of Fig. 1, the fixation unit 10 is a radiation emitter, which emits light of certain frequencies, which interacts with the marking materials, for example UV light in case of UV-curable inks. The fixation unit 10 in Fig. 1 is translatable along a second guide beam 9. Other fixation units 10, such as page-wide curing or drying stations may also be applied. Further, the inkjet printing assembly 7 may be provided with a further fixation unit on the same carriage which holds the print heads. This further fixation unit can be used to (partially) cure and/or harden the marking materials, independent of or interaction with the fixation unit 10.

After printing, and optionally fixation, the print medium 15 is transported to a receiving unit (not shown). The receiving unit may comprise a take-up roller for winding up the print medium 15, a receiving tray for supporting sheets of print medium 15, or a rigid media handler, similar to the media input unit 14. Optionally, the receiving unit may comprise processing means for processing the medium 8, 9 after printing, e.g. a posttreatment device such as a coater, a folder, a cutter, or a puncher.

The wide-format printer 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a controller 12 connected to the printer 1. The controller 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the controller 12 of the printer 1 may be provided with an input port, such as a USB port, so printing jobs may be sent to the printer 1 via this input port.

### Hybrid printing system

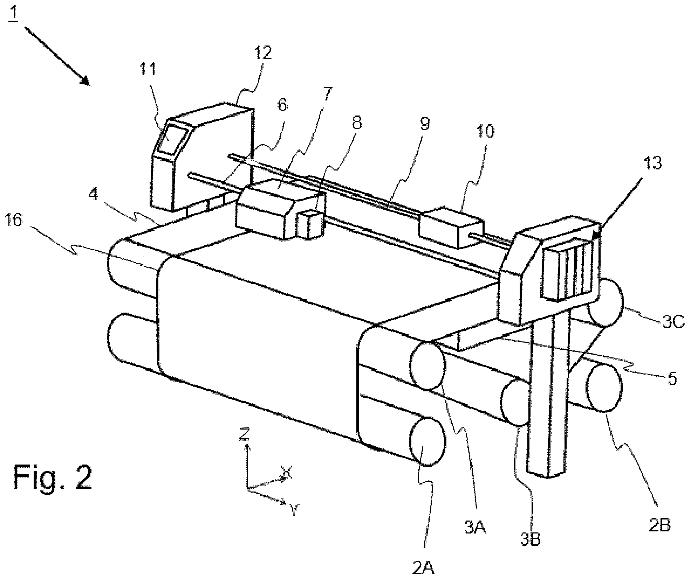

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the print medium 15. Such rigid print media 15 may be panels for doors, walls, corrugated media, plates formed of plastic or metal, etc. To handle these rigid print media 15, the printer 1 in Fig. 1 is configured with a substantially linear transport path: from the media input device 14, the print medium 15 moves forward along the inkjet printing assembly 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

### Printing method

The structures are formed by iteratively depositing clusters of multiple droplets of a marking material on top of a structure-in-formation and curing the deposited marking material before adding the next cluster of drops. This requires that the clusters of drops are deposited precisely on top of the structures-in-formation. In a simple example this may be achieved by keeping the inkjet printing assembly 7 stationary to the print medium 9 with a narrow distance between. In another, more costs effective embodiment, the inkjet printing assembly 7 moves with respect to the print medium 9, such a relatively surface can be jetted by a single inkjet printing assembly 7. In a scanning inkjet printer 5, the inkjet printing assembly 7 moves reciprocally in the scanning direction. Herein an example of a method for printing structures on such a printer 1 will be described.

The process is initiated by the controller receiving print job information, which triggers the printer 5 to be operated in a structure printing mode when executing the corresponding print job. The print job information defines in any suitable format at least one location or area of the structures on the print medium 9, a height parameter for the structures (e.g. an average or maximum height in mm or µm), a marking material parameter (e.g. a colour). A standard density may be applied in case no specific density is prescribed by the print job information. It will be appreciated that multiple, different marking materials may be applied in combination to form a single structure, but the current example will be explained with reference to a single marking material.

The controller has further stored for each marking material a droplet size parameter, corresponding to a volume of a droplet of said marking material from a nozzle of the printer 1. A value for the droplet size parameter may be determined by printing a structure in a predetermined number of passes and dividing the final height of the structure by the number of passes and/or by measuring the drop volume or dimensions. The droplet size may vary dependent on other print process parameters, such as jetting speeds, temperature, etc.

The controller has further stored for each marking material a cluster size parameter, corresponding to a number of droplets in a cluster of said marking material from at least one nozzle of the printer 1. A value for the cluster size parameter may be determined by printing a structure in a predetermined number of passes and dividing the final height of the structure by the number of passes and/or by measuring the drop volume or dimensions. The cluster size may vary dependent on other print process parameters, such as jetting speeds, temperature, etc. The controller may store a comprehensive look-up table which defines droplet height, cluster sizes, droplet sizes, a distance between the clusters and/or volumes across a variety of print process parameters. Additional, a cross-sectional dimension parameter for the structures is determined or selected, for example a cross-sectional area or diameter measured perpendicular to the direction in which the height is measured. The print job information may define a cross-sectional dimension parameter or the cross-sectional dimension parameter may follow from other process parameters. In the latter case, the cross-sectional dimension parameter may correspond to the area formed by a cluster of droplets on the surface of the print medium 15, which has been previously determined and stored on the controller's memory.

The droplet size parameter in combination with the cluster size parameter is then compared to the height parameter to determine the number of passes of the inkjet printing assembly 7 for forming the structure with the height corresponding to the height parameter. Optionally, the controller may determine a number of individual droplets which are deposited per pass onto a structure-in-formation to together form a cluster of drops. In this example, a single cluster of droplets will be jetted onto each structure-in-formation during each pass (so each cluster of drops corresponds to a single cluster). The number of passes may then be determined by dividing the height by a cluster height derived from the droplet volume and the cluster size or by calculating the volume of a structure using the cross-sectional dimension and height parameters and comparing that to the droplet size parameter and cluster size parameter. The determined number of passes is rounded to an integer value.

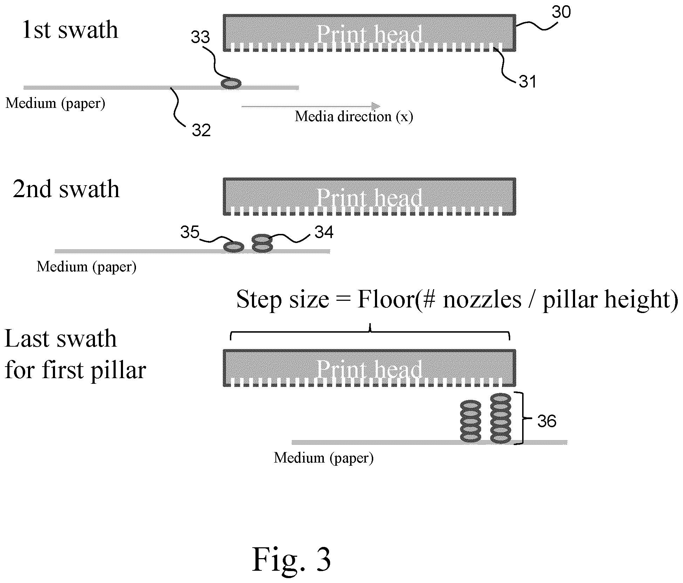

Fig. 3 illustrates the process of printing 3D structures according to the present invention. The 3D structures printed in the example of Fig. 3 are pillars which are printed in swathes of the scanning print head 30 over the print medium 32. The print medium 32 may be paper or any other printing material. The print medium 32 is moving in the media direction x which is perpendicular to the scanning direction of the print head 30. The nozzles 31 are schematically indicated by small vertical white lines and have a predetermined distance between each other, for example 300 nozzles per inch, or 600 nozzles per inch. In a first swath a first ink drop 33 is ejected to the print medium. After a paper step, a second swath is started wherein a second ink drop 34 is ejected on top of the first ink drop 33 to form a first pillar, and a second pillar is started to be built up by providing a third ink drop 35 spaced apart from the first two ink drops 33, 34 of the first pillar. When a last swath is performed for the first pillar, the first pillar has reached a specified height 36, in this example a height of 6 ink drops. A media step size may be based on the number of nozzles and a specified height of the 3D structure, for example by using a formula like Media_Step_Size = Floor ( #Nozzles / Pillar_Height ). For convenience reasons, the height of the pillar expressed in number of ink drops in the example in Fig. 3 is moderate. In practice several hundreds of drops may be used to reach the specified 3D structure height.

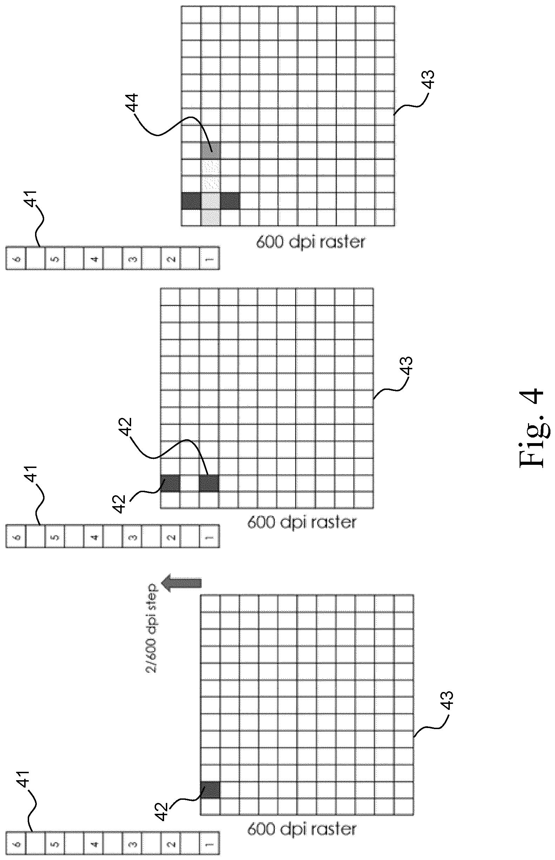

Fig. 4 illustrates printing of swaths in even and odd steps of the print head assembly of the printer according to the present invention. The even steps are numbered 1 to 6 in the vertical bars 41. In the swaths after the even steps the pillars are produced as indicated by the dots 42 in the grids 43 of steps of 600 dpi (=dots per inch). In the swaths after the odd steps the 2D image is produced indicated by the dots 44. The ink ejected during a swath at odd steps at 600 dpi does not add to pillars at 300 dpi, hence it does not add to a time-consuming build-up of the pillars.

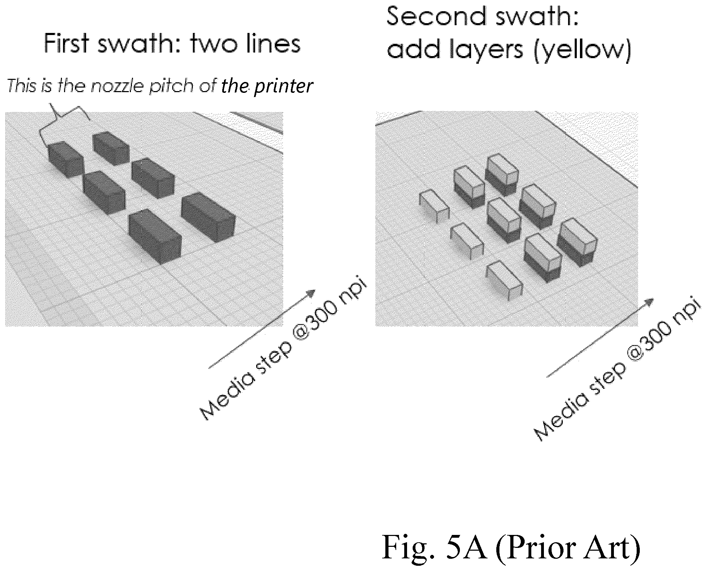

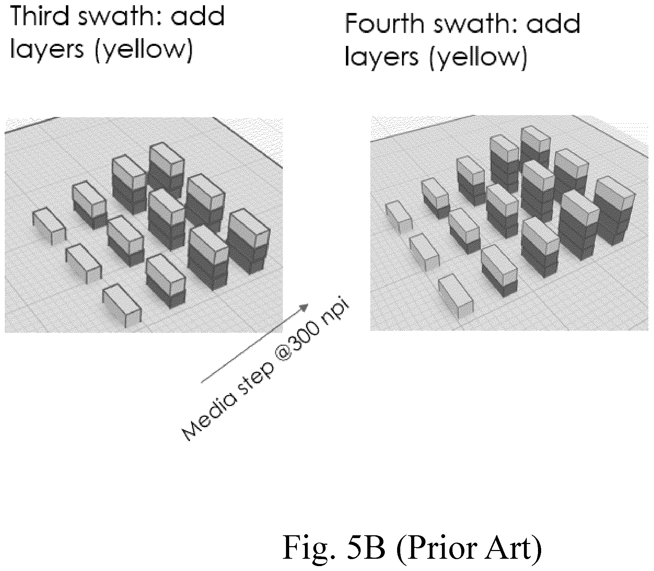

Fig. 5A - 5B show an example of prior art layer printing. In Fig. 5A a first swath of two lines of 3D structures are printed at a distance conform a media step of 300 npi (=nozzles per inch). The ink laid down in the first swath is dark coloured in Fig. 5A. The distance between the two lines is a nozzle pitch of the printer. In a second swath layers are added to the ink laid down in the first swath and also a new line is printed. The ink of the added layers is light coloured. In Fig. 5B printing continues with a third swath and a fourth swath so that 3D structures emerge out of the plane perpendicular to the print medium. A print strategy for pillar printing at 300 dpi is 1. Printing a swath, 2. Taking a media step of a multiple of 1/300 dpi distance, corresponding to a multiple of 2/600, 3.

Printing a next swath on top of the previous swath, 4. Taking a media step of a multiple of 1/300 dpi distance, corresponding to a multiple of 2/600, etc. To create pillars with a height of 60 drops, one needs to print over a certain position 60 times with different nozzles. With a head with 512 nozzles at 300 npi, this means that the media step could be Floor(512/60) = 8 at 300 dpi, or 16 at 600 dpi distance. Hereinafter the media steps are indicated in unit steps of 600 dpi. In this example the media steps are 16/16/16/16/16/ etc.

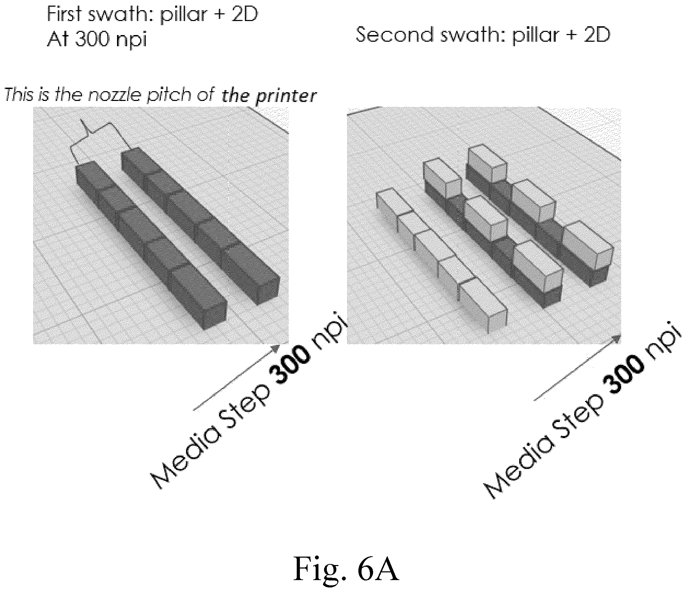

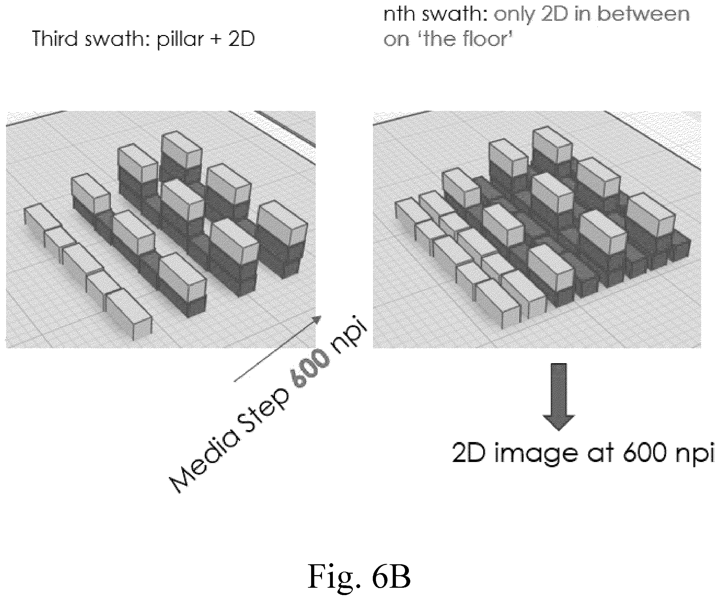

Fig. 6A - 6B show an example of printing layers according to the present invention. In Fig. 6A a first swath of two lines of 3D structures are printed at a distance conform a media step of 300 npi (=nozzles per inch). The distance between the two lines is also the nozzle pitch of the printer. The ink laid down in the first swath is dark coloured in Fig. 6A. In a second swath layers are added to the ink laid down in the first swath and also a new line is printed. The ink of the added layers is light coloured in Fig. 6A. In Fig. 6B printing continues with a third swath. After the third swath a media step of 600 npi is introduced. In the fourth swath only ink for the 2D image is printed on the 'floor', i.e. on the print medium between the already printed 3D structures. When printing 600 dpi with 300 dpi pillars, according tot he present invention the media steps become 16 / 16 / 16 / 16 1 16 1 16 1 1 1 15 1 16 1 16 1 16 1 16 1 16 1 16 1 16 1 16 1 1 1 15 1 16 1 16 1 etc By doing so, one can fill in the 600 dpi raster only once every 1 out of (for example) 10 - 60 swaths. Hence, there is only one in 10 swaths that does not add to pillar height.

Therefore productivity decreases only a little compared to 300-dpi-only printing and the higher the pillars, the more productivity is gained.

The less quality is desired of the 2D image, the more gain of productivity compared to normal 2D printing: single pass printing vs 6-pass printing, for half-toning masks etc) The swath after the step of '1' does no built up the pillars, it only fill in the 600 dpi raster.

A number of passes Z in the combined print strategy may be Z = H + P/2 wherein H is the pillar height and P is a regular number of passes for a certain print quality, e.g. 4 for a 4-pass mode. For example a pillar height of 60 drops is produced in 60 passes.

From a normal high resolution 4-pass mode, 2 passes may be combined with 3D printing, and the other two are additional passes. So instead of 60 passes, 60 + 4/2 = 62 passes are needed.

The media speed of printing can also calculated. A speed for normal 3D printing is equal to 1/H. A media speed for combined printing according to the prior art is equal to 1/(2*H). The media speed for combined printing according to the present invention is equal to 1/(H+P/2) which is substantially higher than 1/(2*H) in prior art printing.

For example, if all indicated media step sizes are at 600 dpi resolution with 300 npi pillar printing and a 4-pass 600 npi 2D image, the average speeds may be calculated. If the pillar height is equal to 60, a 2D step size according to the prior art may be equal to 251/253, a step size for 300 npi pillars may be 16 and step sizes for 600 npi pillars with a 2D image are 15/1. This means that every 15 swaths, one additional swath needs to be inserted. Therefore pillar and 2D printing at 600 npi only has an average media speed of 8 steps / swath, pillar printing at 300 npi only has an average speed of 16 steps / swath and the productive combination according tot he present invention has an average media speed of 15.06 steps / swath. By adding the 2D image to the structure 3D printing the average media speed is only 6% lower.

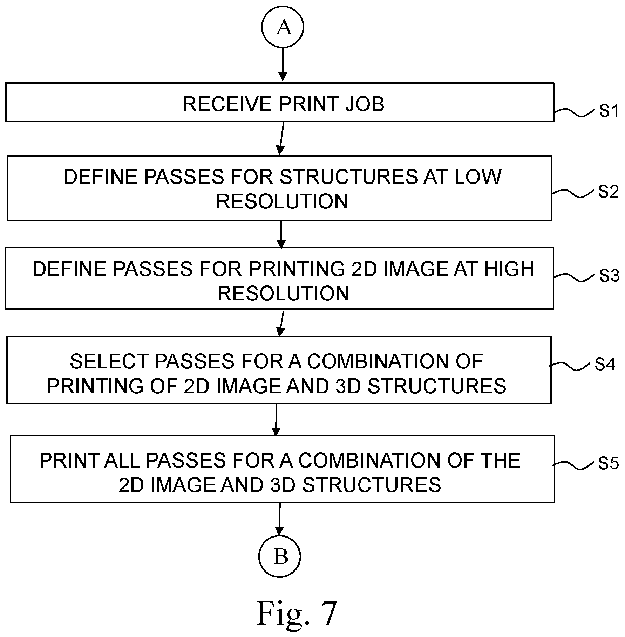

Fig. 7 shows an embodiment of the method according to the present invention in combination with Figs. 6A - 6B for further elucidation.

The method starts in a starting point A which leads to a first step S1.

In the first step S1 a print job of a digital 2D image combined with the spaced apart, out-of-plane 3D structures is received to be printed on the print medium.

In a second step S2 passes are defined for printing the 3D structures of a predetermined height at a low resolution on the print medium .

In a third step S3 passes are defined for printing the 2D image at a high resolution on the print medium as a background.

In a fourth step S4 from the passes defined in the second step S2 and the third step S3 passes are selected for combining the printing of the background image and the 3D structures at a high resolution. The selected passes are separated from one another by a number of low resolution passes defined in the second step S2.

In a fifth step S5 all defined and selected passes are printed in order to produce the 2D background image and the 3D structures.

The method ends in an end point B.

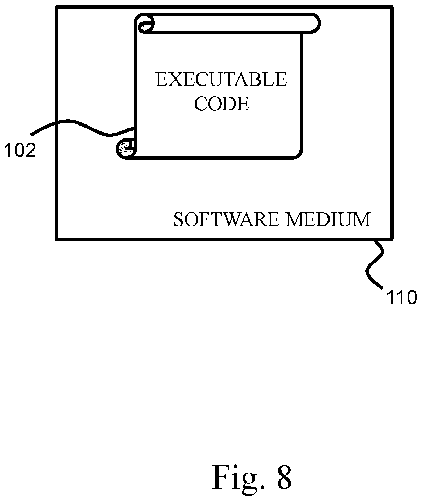

Fig. 8 schematically shows a non-transitory software medium 110 according to the invention. The software medium 110 comprises executable code 102 configured to, when executed, perform the method according to the invention, e.g. as described with respect to either the printer shown in Figs. 1 - 2 or the method shown in Figs. 6A, 6B, 7 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A method of printing 3D structures spaced apart from each other and distributed across a 2D background image on a scanning printer, comprising the steps of:
- printing swaths for the 3D structures at a low resolution to create 3D structures of a predetermined height;
- printing swaths for the background image in high resolution, being a manifold of the low resolution;
- wherein a number of passes for completing a segment of the background image is less than a number of passes for completing a segment of structures; and
- wherein in certain high resolution passes printing of both the background image and the 3D structures is combined, said passes being separated from one another by a number of low resolution passes.

2. A method according to claim 1, wherein the number of combined passes is a half of the number of passes for completing a segment of the background image.

3. A method according to claim 1 or 2, wherein a total number of passes for completing the 3D structures corresponds to a height of the 3D structures.

4. A method according to claim 1, wherein the low resolution is 300 dots per inch and the high resolution is 600 dots per inch.

5. An inkjet printer comprising:
- a translatable printhead carriage (2) translatable over a medium support surface (10) and comprising at least one printhead (11) comprising nozzles (12, 12A-12E) for jetting droplet of UV curable marking material onto a print medium (9) on the medium support surface (10);
- a curing station (14) configured for emitting UV radiation for curing marking material on the print medium (9) on the medium support surface (10); and
- a print controller configured to perform the method according to any of the preceding claims.

6. An inkjet printer according to claim 5, wherein the inkjet printer is a roll fed printer or a flatbed printer.

7. A non-transitory software medium comprising a computer program with instructions which, when the program is executed by a print controller of an inkjet printer, cause the computer to carry out the steps of the method of any of the claims 1 to 4.

8. A print medium with a printed surface formed by performing the steps of the method according to any of the claims 1 to 4.
